# EUROPÄISCHE PATENTSCHRIFT

(11) **EP 1 243 450 B1**
(45) Veröffentlichungstag und Bekanntmachung des Hinweises auf die Patenterteilung: **20.05.2009**
(21) Anmeldenummer: 02006226.1
(22) Anmeldetag: 20.03.2002
(51) Int. Cl.: B60H 1/34

(54) **Strömungsauslassvorrichtung, insbesondere für ein Fahrzeuginnenraum-Belüftungssystem**
Flow outlet device, especially for ventilating the vehicle interior
Dispositif de sortie d'air, notamment pour la ventilation de l'habitacle d'un véhicule

(30) Priorität: 23.03.2001 DE 10114605
(43) Veröffentlichungstag der Anmeldung: 25.09.2002
(73) Patentinhaber: Behr GmbH & Co. KG, 70469 Stuttgart (DE)
(72) Erfinder: Feith, Thomas, 70825 Korntal-Münchingen (DE); Houver, Jérôme, 68740 Fessenheim (FR); Klingler, Wilhelm Georg, 89077 Ulm (DE); Noisternig, Johannes, Dr., 85649 Brunthal (DE)

(56) Entgegenhaltungen:
- EP-A- 0 257 500
- DE-A- 2 003 697
- DE-A- 2 114 297
- DE-A- 2 329 244
- US-A- 2 317 798
- US-A- 4 677 904

## Beschreibung

Die Erfindung bezieht sich auf eine Strömungsauslassvorrichtung nach dem Oberbegriff des Anspruchs 1.

Strömungsauslassvorrichtungen mit einer Auslassöffnung, zu der ein Strömungskanal führt, finden beispielsweise für Luftkanäle von Belüftungs-, Heizungs- und Klimaanlagen in Kraftfahrzeugen breite Verwendung, um Klimatisierungsluft in verschiedene Bereiche eines Fahrzeuginnenraums über geeignet platzierte Auslassöffnungen auszublasen.

Eine spezielle diesbezügliche Anwendung, die in jüngerer Zeit an Bedeutung gewinnt, sind Luftströmungsauslassvorrichtungen, die eine sogenannte diffuse Belüftung eines Fahrzeuginnenraumbereichs ermöglichen. Hierzu werden relativ großflächige Luftaustritte vorgesehen, um die Luftaustrittsgeschwindigkeit gering zu halten und damit Zugerscheinungen für die Fahrzeuginsassen zu vermeiden. Andererseits ist für bestimmte Situationen eine erhöhte Luftströmungsgeschwindigkeit gewünscht, z.B. zum Defrosten einer Windschutzscheibe. Eine bekannte Maßnahme, die diese beiden Anforderungen berücksichtigt, besteht darin, an der Oberseite eines Armaturenbretts zusätzlich zu den üblichen Defrost-Auslassöffnungen eine oder mehrere weitere, großflächigere Auslassöffnungen vorzusehen und die Luft mittels eines zugehörigen Luftverteilungssystems steuerbar der bzw. den großflächigen Auslassöffnungen und/oder den Defrost-Auslassöffnungen zuzuführen.

Eine solche Strömungsauslassvorrichtung eines Fahrzeuginnenraum-Belüftungssystems mit Defrost-Auslassöffnungen und zusätzlicher großflächiger Auslassöffnung ist in der Gebrauchsmusterschrift DE 200 07 819 U1 offenbart. Problematisch ist bei diesen herkömmlichen Vorrichtungen der zusätzliche Platzbedarf für den oder die großflächigen, diffusen Auslassöffnungen an der Oberseite des Armaturenbretts sowie für die Luftführung im darunterliegenden Bereich. Zudem wird dadurch die Designfreiheit bei der Gestaltung der Oberseite des Armaturenbretts eingeschränkt.

In der Offenlegungsschrift DE 197 39 652 A1 ist für eine Belüftungseinrichtung, insbesondere eines Fahrzeuginnenraums, eine Strömungsauslassvorrichtung der eingangs genannten Art beschrieben, bei der das Düsenelement zur variablen Einstellung des effektiven Ausströmquerschnitts für einen in die Auslassöffnung mündenden Strömungskanal von zwei im Einströmbereich eines Gehäuses der Belüftungseinrichtung schwenkbar angebrachten Klappen und/oder von zwei Mantelflächensegmenten eines Zylinders gebildet ist, die im Ausströmbereich des in diesem Fall zylinderförmigen Gehäuses der Belüftungseinrichtung drehbar angeordnet sind. Der durch die Auslassöffnung im Gehäuse vorgegebene, austrittsseitige maximale Ausströmquerschnitt der Belüftungseinrichtung ist dabei gleich groß gewählt wie der dem Strömungskanalquerschnitt entsprechende, eintrittsseitige Einströmquerschnitt. Die Klappen können zwischen einer Stellung, in der sie den Strömungskanal vollständig verschließen, und einer maximal offenen Stellung gegensinnig verschwenkt werden, in der sie gegen die Strömungskanalwandung anliegen, so dass dann ihr austrittsseitiger Ausströmquerschnitt gleich ihrem eintrittsseitigem Einströmquerschnitt ist. Mit den Zylindersegmenten kann der effektive Querschnitt der Auslassöffnung vom maximalen, dem Einströmquerschnitt entsprechenden Querschnitt auf einen jeweils gewünschten Wert verkleinert werden.

Die EP-A1-0 672 551 offenbart als nächster Stand des Technik eine Strömungsauslassvorrichtung gemäß dem Oberbegriff des Anspruchs 1.

Der Erfindung liegt als technisches Problem die Bereitstellung einer neuartigen Strömungsauslassvorrichtung der eingangs genannten Art zugrunde, die mit relativ geringem Aufwand herstellbar und betreibbar ist und einen Austritt des verwendeten Strömungsmediums mit variabler Austrittsgeschwindigkeit ermöglicht, so dass z.B. wahlweise eine mehr gerichtete oder mehr diffuse Ausströmung desselben eingestellt werden kann.

Die Erfindung löst dieses Problem durch die Bereitstellung einer Strömungsauslassvorrichtung mit den Merkmalen des Anspruches 1. Diese beinhaltet ein im Strömungskanal vor der Auslassöffnung angeordnetes, ansteuerbares Düsenelement, das einen variabel einstellbaren effektiven Ausströmquerschnitt für den in die Auslassöffnung mündenden Strömungskanal definiert. Dabei ist das Düsenelement so ausgelegt, dass sein in Strömungsrichtung austrittsseitig gemessener Ausströmquerschnitt auf Werte größer als sein eintrittsseitiger Einströmquerschnitt eingestellt werden kann. Dies ermöglicht bei Bedarf die Erzielung einer besonders diffusen Ausströmcharakteristik.

Erfindungsgemäß beinhaltet das Düsenelement zwei beweglich angeordnete Düsenwände, die geeignet relativ zueinander bewegbar sind, um den zwischen ihnen gebildeten, effektiven Ausströmquerschnitt zu variieren. Dies stellt eine sowohl konstruktiv als auch betriebstechnisch vorteilhaft einfache Realisierung des Düsenelementes dar. Erfindungsgemäß sind die beiden Düsenwände jeweils entlang eines von der Auslassöffnung abgewandten Stirnseitenbereichs schwenkbeweglich angeordnet.

Durch entsprechende Ansteuerung des Düsenelementes ist es damit möglich, das verwendete, über den Strömungskanal zugeführte Strömungsmedium mit unterschiedlichem effektivem Ausströmquerschnitt und damit unterschiedlicher Geschwindigkeit wahlweise mehr gerichtet oder mehr diffus aus derselben Auslassöffnung ausströmen zu lassen. Die erfindungsgemäße Vorrichtung kann insbesondere in Fahrzeuginnenraum-Belüftungssystemen dazu verwendet werden, Zuluft über dieselbe(n) Auslassöffnung(en) im Bereich der Oberseite eines Armaturenbretts wahlweise stärker gerichtet zwecks Defrosten einer Windschutzscheibe oder mit geringerer Ausströmgeschwindigkeit mehr diffus auszublasen. Es ist dadurch nicht notwendig, zusätzlich zu kleinflächigeren Defrost-Auslassöffnungen eine oder mehrere großflächigere Auslassöffnungen für diffuse Belüftung vorzusehen. Vielmehr können für beide Belüftungszwecke dieselben Auslassöffnungen verwendet werden.

Eine nach Anspruch 2 weitergebildete Strömungsauslassvorrichtung ist Teil eines Fahrzeuginnenraum-Belüftungssystems und dient speziell zum Ausblasen von Luft in den Innenraumbereich oberhalb eines Armaturenbretts. Dazu ist die Auslassöffnung an der Oberseite des Armaturenbretts vorgesehen und mit einem luftdurchlässigen Abdeckelement abgedeckt. Durch entsprechende Verstellung des Düsenelements kann einerseits ein eher gerichteter Defrost-Luftstrom und andererseits eine mehr diffuse Belüftung des vorderen Innenraumbereichs bewirkt werden.

Vorteilhafte Ausführungsformen der Erfindung sind in den Zeichnungen dargestellt und werden nachfolgend beschrieben. Hierbei zeigen:
- Fig. 1: eine schematische Seitenansicht einer Strömungsauslassvorrichtung, die z.B. zur wahlweisen Defrost-Belüftung und diffusen Belüftung bei einer Kraftfahrzeug-Klimaanlage einsetzbar ist, in einer ersten Düsenelementstellung für diffuse Belüftung,
- Fig. 2: eine Ansicht entsprechend Fig. 1, jedoch mit dem Düsenelement in einer zweiten Stellung für diffuse Belüftung,
- Fig. 3: die Ansicht von Fig. 1, jedoch mit dem Düsenelement in einer Stellung für mehr gerichtete Belüftung,
- Fig. 4 und 5: eine Längsschnittansicht bzw. eine perspektivische, teilweise weggebrochene Darstellung einer im vorderen Armaturenbrettbereich vorgesehenen Strömungsauslassvorrichtung in einer Düsenelementstellung für diffuse Belüftung,
- Fig. 6 und 7: die Ansichten gemäß Fig. 4 bzw. 5, jedoch mit einer Düsenelementstellung für Defrost und
- Fig. 8 und 9: die Ansichten gemäß Fig. 4 bzw. 5 und 6 bzw. 7, jedoch mit dem Düsenelement in einer Zwischenstellung.

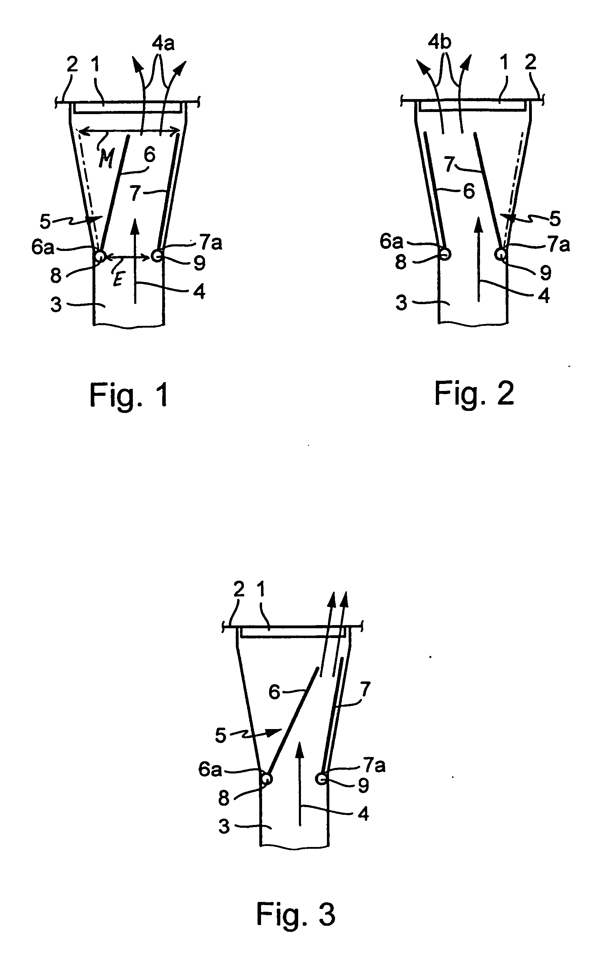

Die Fig. 1 bis 3 zeigen schematisch in Seitenansichten eine Strömungsauslassvorrichtung mit einer Auslassöffnung 1, die innerhalb einer nicht weiter gezeigten Fläche 2 eingebracht ist, bei der es sich z.B. um die Oberseite eines Armaturenbretts in einem Fahrzeuginnenraum handeln kann. Zu der Auslassöffnung 1 führt ein Strömungskanal 3, über den ein Strömungsmedium 4 zuführbar ist, z.B. ein Luftstrom zur Belüftung eines Fahrzeuginnenraums.

Vor der Auslassöffnung 1 ist im Strömungskanal 3 ein Düsenelement 5 angeordnet, das von zwei schwenkbeweglich angeordneten Düsenwänden 6, 7 gebildet ist, die sich gegenüberliegende, seitliche Begrenzungswände des betreffenden effektiven Luftkanal-Durchtrittsquerschnitts darstellen. Jede der beiden Düsenwände 6, 7 ist um eine zugehörige Drehachse 8, 9 schwenkbeweglich gelagert, die entlang ihrer der Auslassöffnung 1 abgewandten, in den Fig. 1 und 3 unteren Stirnseite 6a, 7a verläuft. Die Düsenwände 6, 7 können je nach Bedarf von starren oder flexiblen Wand- bzw. Flächenelementen gebildet sein.

Die beiden Düsenwände 6, 7 können getrennt voneinander durch entsprechende Verstellmittel üblicher und daher hier nicht weiter gezeigter Art betätigt, d.h. verschwenkt werden, um je nach Bedarf gewünschte, unterschiedliche Strömungscharakteristika für das ausströmende Medium 4 hinsichtlich Ausströmrichtung und Ausströmgeschwindigkeit einzustellen.

Genauer gesagt lässt sich mit dem Düsenelement 5 ein austrittsseitiger effektiver Ausströmquerschnitt, gemessen auf Höhe der freien Endkanten der beiden Düsenwände 6, 7 variabel zwischen dem Wert null, der einem vollständig geschlossenen Zustand des Düsenelements 5 entspricht, und einem maximalen Ausströmquerschnitt M einstellen, der sich ergibt, wenn beide Düsenwände 6, 7 eine jeweilige kanalgehäuseseitige Endlage einnehmen. Die eine Düsenwand 6 befindet sich dann in der in Fig. 1 gestrichelt angedeuteten, linken Endstellung, die andere Düsenwand 7 in der gezeigten, rechten Endstellung. Da sich gleichzeitig im Bereich der schwenkbaren Düsenwände 6, 7 das umgebende Kanalgehäuse in Strömungsrichtung trichterförmig aufweitet, ist der maximale austrittsseitige Ausströmquerschnitt M deutlich größer als der eintrittsseitige Einströmquerschnitt E, und zwar um das Verhältnis, um welches in dieser maximal geöffneten Stellung des Düsenelements 5 der Abstand der austrittsseitigen, freien Düsenwandkanten größer als der Abstand der eintrittsseitigen Düsenwandkanten, d.h. der Abstand der beiden Drehachsen 8, 9, ist.

Fig. 1 zeigt das Düsenelement 5 in einer ersten Stellung für diffuse Belüftung, wobei die Düsenwände 6, 7 etwa parallel zueinander stehen und bezüglich der Vertikalen von Fig. 1 leicht nach rechts geneigt sind. Dadurch leiten sie die ankommende Strömung 4 ohne Verengung des Ausströmquerschnitts nach oben vorwiegend zur in Fig. 1 rechten Hälfte der Auslassöffnung 1. Dort tritt sie wegen des sich nicht merklich verengenden Durchströmquerschnitts mit relativ mäßiger Ausströmgeschwindigkeit als weitgehend diffuse Strömung 4a aus.

In der in Fig. 2 gezeigten Stellung des Düsenelements 5 verlaufen die beiden Düsenwände 6, 7 bezüglich der Vertikalen etwa spiegelsymmetrisch zur Stellung von Fig. 1, so dass in dieser Düsenelementstellung eine wiederum weitgehend diffuse Strömung 4b bewirkt wird, die in diesem Fall primär aus der in Fig. 2 linken Hälfte der Auslassöffnung 1 austritt.

Eine noch stärker diffuse Strömung kann dadurch eingestellt werden, dass ausgehend von Fig. 1 die linke Düsenwand in ihre linke, in Fig. 1 gestrichelt angedeutete Endstellung bzw. ausgehend von Fig. 2 die rechte Düsenwand 7 in ihre rechte, in Fig. 2 gestrichelt angedeutete Endstellung verbracht wird. In diesem Fall nimmt der effektive Durchtrittsquerschnitt des Düsenelements in Strömungsrichtung stetig vom eintrittsseitigen Düsenelement-Einströmquerschnitt E, der im wesentlichen dem kleineren Querschnitt des stromaufwärtigen Kanalabschnitts entspricht, bis zum demgegenüber größeren maximalen Ausströmquerschnitt M zu, der im wesentlichen dem größeren Querschnitt der Auslassöffnung 1 entspricht, wodurch sich die Strömungsgeschwindigkeit verlangsamt und folglich eine betont diffuse Ausströmung aus der Auslassöffnung 1 bewirkt wird.

Fig. 3 zeigt den anderen Extremfall der Einstellung einer besonders gerichteten Strömung 4c in Richtung nach rechts oben. Dazu wird das Düsenelement 5 in eine Stellung gesteuert, in welcher sich die rechte Düsenwand 7 in ihrer rechten Endstellung befindet, während die linke Düsenwand 6 merklich über ihre zur rechten Düsenwand 7 parallele Stellung hinaus nach rechts verschwenkt ist, so dass die beiden Düsenwände 6, 7 den zwischen ihnen definierten effektiven Ausströmquerschnitt in Strömungsrichtung stark verringern. Dies hat eine entsprechend starke Erhöhung der Strömungsgeschwindigkeit des Strömungsmediums 4 zur Folge, das somit als vergleichsweise gerichtete Strömung 4c mit relativ hoher Geschwindigkeit aus dem in Fig. 3 rechten Bereich der Auslassöffnung 1 austritt.

Es versteht sich, dass durch im wesentlichen synchrones Verschwenken beider Düsenwände 6, 7 aus der in Fig. 3 gezeigten Stellung nach links die gerichtete Strömung 4c je nach Bedarf aus weiter links liegenden Bereichen der Auslassöffnung 1 mit geringerer Strömungskomponente nach rechts bzw. mit einer Strömungskomponente nach links herausgeführt werden kann. Analog ist es ausgehend von den Stellungen der Fig. 1 bzw. 2 möglich, durch gemeinsames Verschwenken beider Düsenwände 6, 7 den primären Austrittsbereich der hier diffus eingestellten Strömungen 4a, 4b in gewünschter Weise zu verändern.

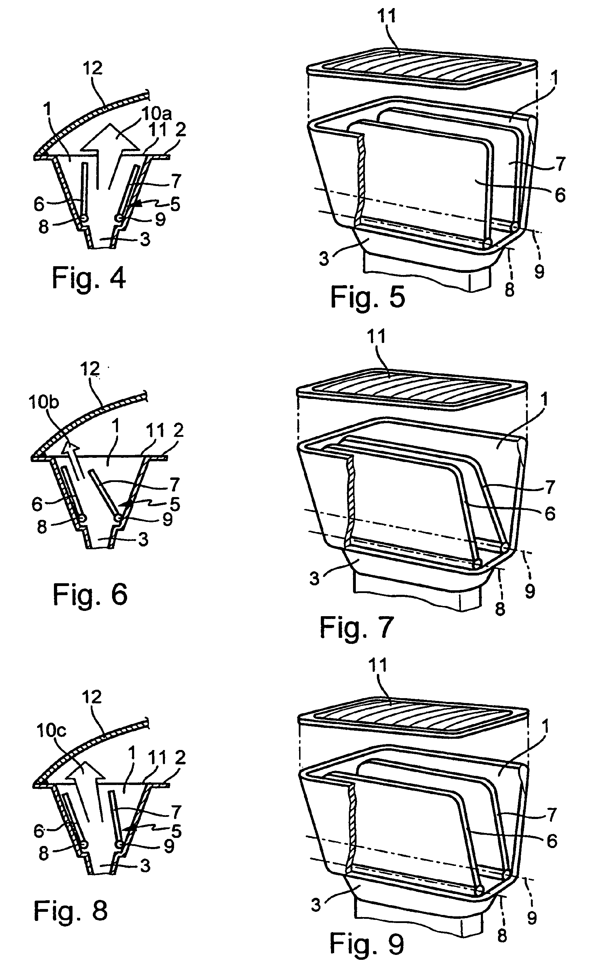

Die Fig. 4 bis 9 veranschaulichen eine konkrete Anwendung einer Strömungsauslassvorrichtung des in den Fig. 1 bis 3 gezeigten Typs zur wahlweisen Einstellung verschiedener Belüftungsformen zwischen einer Defrost-Belüftung und einer weitestgehend diffusen Belüftung eines vorderen Innenraumbereichs eines Kraftfahrzeugs oberhalb eines Armaturenbretts. Dabei sind zum leichteren Verständnis für sich funktionell entsprechende Elemente jeweils dieselben Bezugszeichen wie in den Fig. 1 bis 3 verwendet.

Die Auslassöffnung 1 ist im vorderen Bereich der Oberseite 11 des Armaturenbretts 2 eingebracht. Im Abstand über der Auslassöffnung 1 verläuft in üblicher Weise eine Windschutzscheibe 12. In die Auslassöffnung 1 der Armaturenbrettoberseite 2 ist eine durchlässige Abdeckung in Form eines Gitters 11 eingesetzt, wobei alternativ eine andere durchlässige Abdeckung verwendbar ist, z.B. eine gelochte Platte.

Die Strömungsauslassvorrichtung der Fig. 4 bis 9 vereinigt die Defrost-Funktion mit der zusätzlichen Funktion diffuser Belüftung unter Verwendung derselben Auslassöffnung(en) 1, deren Lage in etwa derjenigen herkömmlicher Defrost-Auslässe entspricht, wobei die Breite, d.h. die Ausdehnung in Fahrzeuglängsrichtung, vorzugsweise größer als bei herkömmlichen Defrost-Auslässen gewählt ist. Das Anordnen eines oder mehrerer Defrost-Auslässe und davon getrennt eines oder mehrerer großflächigerer Auslassöffnungen für diffuse Belüftung ist daher bei Verwendung dieser Strömungsauslassvorrichtung nicht erforderlich. Die Einstellung von eher gerichteter Belüftung für Defrost-Zwecke bzw. eher diffuser, für die Insassen zugfreier Belüftung erfolgt durch entsprechende Einstellung des Düsenelements 5.

Die Fig. 4 und 5 zeigen das Düsenelement 5 in einer Stellung zur Erzeugung eines diffusen Luftstroms 10a. Dazu sind die beiden Düsenwände 6, 7 in eine sich trichterförmig öffnende Position eingestellt. Dadurch nimmt der effektive Durchtrittsquerschnitt in Strömungsrichtung zu, und folglich nimmt die Strömungsgeschwindigkeit des über den Luftkanal 3 zugeführten Luftstroms ab, so dass er mit vergleichsweise geringer Strömungsgeschwindigkeit als diffuse Belüftungsströmung 10a aus der Ausströmöffnung 1 austritt.

Die Fig. 6 und 7 zeigen das Düsenelement 5 in einer Defrost-Stellung. Dazu befindet sich die linke Düsenwand 6 in ihrer linken Endstellung, und die rechte Düsenwand 7 ist deutlich über ihre zur linken Düsenwand 6 parallele Stellung hinaus nach links verschwenkt, so dass entsprechend Fig. 3 der effektive Ausströmquerschnitt in Strömungsrichtung deutlich verengt wird. Dadurch erzeugt das Düsenelement 5 einen Defrost-Luftstrom 10b mit vergleichsweise hoher Ausströmgeschwindigkeit, der stark gerichtet gegen den vorderen Bereich der Windschutzscheibenunterseite geblasen wird und so die geforderte Defrost-Funktion erfüllt.

Die Fig. 8 und 9 veranschaulichen eine Zwischenstellung des Düsenelements 5, in welcher die Strömungsauslassvorrichtung einen Luftstrom 10c liefert, der bei Bedarf noch eine gewisse Defrost-Funktion erfüllt, andererseits aber nicht mehr mit der hohen Geschwindigkeit des Luftstroms 10b der Fig. 6 und 7 ausströmt und dadurch auch schon eine gewisse diffuse Belüftungscharakteristik besitzt. Die linke Düsenwand 6 befindet sich in dieser Düsenelementstellung in ihrer linken Endposition, während die rechte Düsenwand 7 geringfügig über ihre zur linken Düsenwand 6 parallele Position hinaus nach rechts verschwenkt ist, so dass der von den beiden Düsenwänden 6, 7 definierte effektive Durchtrittsquerschnitt in Strömungsrichtung leicht zunimmt und die Luft verglichen mit der Düsenelementstellung der Fig. 4 und 5 primär in einen weiter vorn liegenden Abschnitt der Auslassöffnung 1 und damit auch der Windschutzscheibenunterseite geleitet wird.

Es versteht sich, dass außer den drei gezeigten Düsenelementstellungen je nach Bedarf jede beliebige andere relative Stellung der beiden schwenkbeweglichen Düsenwände 6, 7 einstellbar ist, wozu selbige vorzugsweise unabhängig voneinander einzeln verschwenkbar sind. Weiter versteht sich, dass je nach Bedarf mehrere Strömungsauslassvorrichtungen der in den Fig. 4 bis 9 gezeigten Art z.B. im Abstand nebeneinander hinter der Windschutzscheibenunterkante im Armaturenbrett vorgesehen sein können, oder es kann alternativ eine einzige sich entlang der ganzen Windschutzscheibenlänge oder jedenfalls des größten Teils derselben erstreckende Auslassöffnung vorgesehen sein.

Die gezeigten und oben näher erläuterten Ausführungsbeispiele machen deutlich, dass die erfindungsgemäße Strömungsauslassvorrichtung eine variable Einstellung der Ausströmcharakteristik eines verwendeten Strömungsmediums zwischen einer gerichteten Strömung mit vergleichsweise hoher Ausströmgeschwindigkeit einerseits und einer diffusen Strömung mit vergleichsweise niedriger Ausströmgeschwindigkeit andererseits durch jeweils dieselbe(n) Auslassöffnung(en) ermöglicht, indem ein entsprechend ansteuerbares Düsenelement vor der jeweiligen Auslassöffnung im Strömungskanal platziert wird.

Es versteht sich, dass außer der gezeigten auch andere Realisierungen des Düsenelementes möglich sind, mit denen sich der effektive Ausströmquerschnitt in gewünschter Weise variabel einstellen lässt. In Fahrzeuganwendungen können erfindungsgemäße Strömungsauslassvorrichtungen nicht nur wie erwähnt an der Stelle herkömmlicher Defrosterdüsen vorgesehen sein, sondern z.B. auch im Mitteltunnelbereich oder im Bereich eines Mittenaufbaus an der Oberseite des Armaturenbretts und an beliebigen anderen Stellen des Fahrzeuginnenraums, an denen herkömmlicherweise Luftaustrittsdüsen platziert sind und für die eine variable Einstellung zwischen eher gerichteter und eher diffuser Ausströmung wünschenswert ist. Des weiteren ist die erfindungsgemäße Strömungsauslassvorrichtung selbstverständlich auch für Anwendungen außerhalb der Fahrzeugtechnik überall dort geeignet, wo Bedarf an einer solchen Strömungsauslassvorrichtung mit derart variabel einstellbarer Ausströmcharakteristik besteht.

## Patentansprüche

1. Strömungsauslassvorrichtung, insbesondere für ein Fahrzeuginnenraum-Belüftungssystem, mit
- einer Auslassöffnung (1), zu der ein Strömungskanal (3) führt,
und
- einem im Strömungskanal (3) vor der Auslassöffnung (1) angeordneten, ansteuerbaren Düsenelement (5) mit einem eintrittsseitigen Einströmquerschnitt (E) und einem austrittsseitigen, variabel zwischen einem Maximalquerschnitt (M) und einem Minimalquerschnitt einstellbaren effektiven Ausströmquerschnitt für den in die Auslassöffnung mündenden Strömungskanal, wobei der maximale Ausströmquerschnitt (M) des Düsenelements (5) größer als sein Einströmquerschnitt (E) ist, **dadurch gekennzeichnet, dass** das Düsenelement zwei beweglich angeordnete Düsenwände (6, 7) beinhaltet, die relativ zueinander zwischen einer Maximalaustrittsstellung, in der sie den maximalen Ausströmquerschnitt zwischen sich begrenzen, und einer Minimalaustrittsstellung bewegbar sind, in der sie den minimalen Ausströmquerschnitt zwischen sich begrenzen und wobei die Düsenwände (6, 7) um eine jeweils eigene von einander beabstandete Drehachse (8, 9) verschwenkbar sind, die entlang eines der Auslassöffnung (1) abgewandten Stimseitenbereichs (6a, 7a) der betreffenden Düsenwand verläuft.

2. Strömungsauslassvonichtung nach Anspruch 1, weiter **dadurch gekennzeichnet, dass** sie einen Teil eines Fahrzeuginnenraum-Belüftungssystems derart bildet, dass die Auslassöffnung (1) an der Oberseite eines Armaturenbretts (2) vorsehbar und mit einem luftdurchlässigen Abdeckelement (11) abdeckbar ist und das Düsenelement (5) zwischen einer Stellung zur Erzeugung eines Defrost-Luftstroms (10b) und einer Stellung zur Erzeugung eines diffusen Luftstroms (10a) verstellbar ist.

## Claims

1. Flow outlet device, in particular for a ventilation system for a vehicle interior, with
- an outlet (1) to which a flow passage (3) leads, and
- a controllable nozzle element (5) located in the flow passage (3) upstream of the outlet (1), with an inlet-side inflow cross-section (E) and an outlet-side effective outflow cross-section for the flow passage terminating at the outlet, which is variably adjustable between a maximum cross-section (M) and a minimum cross-section, the maximum outflow cross-section (M) of the nozzle element (5) being larger than its inflow cross-section (E),
**characterised in that in that** the nozzle element comprises two movably arranged nozzle walls (6, 7) movable relative to one another between a maximum outlet position in which between them they bound the maximum outflow cross-section and a minimum outlet position in which between them they bound the minimum outflow position, and **in that** each of the nozzle walls (6, 7) is pivotable about its own mutually spaced axis of rotation (8, 9), which extends along an end face region (6a, 7a) of the respective nozzle wall which is remote from the outlet (1).

2. Flow outlet device according to claim 1, further **characterised in that** it forms a part of a ventilation system of a vehicle interior such that the outlet (1) can be provided on the top of an instrument panel (2) and covered by an air-permeable cover element (11), and **in that** the nozzle element (5) is adjustable between a position for generating a defrosting air flow (10b) and a position for generating a diffuse air flow (10a).

## Revendications

1. Dispositif de sortie d'écoulement d'air, en particulier pour un système de ventilation de l'habitacle d'un véhicule, comprenant
- une ouverture de sortie (1) vers laquelle mène un conduit d'écoulement (3)
et
- un élément de buse réglable (5) disposé, dans le conduit d'écoulement (3), en amont de l'ouverture de sortie (1), ledit élément de buse comportant, côté entrée, une section d'admission (E) et, côté sortie, une section d'évacuation effective, réglable de façon variable, entre une section maximale (M) et une section minimale, ladite section d'évacuation étant prévue pour le conduit d'écoulement débouchant dans l'ouverture de sortie, où la section d'évacuation maximale (M) de l'élément de buse (5) est supérieure à sa section d'admission (E),
**caractérisé en ce que** l'élément de buse comprend deux parois de buse (6, 7) disposées de façon mobile, parois de buse qui peuvent être déplacées l'une par rapport à l'autre, entre une position de sortie maximale dans laquelle elles limitent entre elles la section d'évacuation maximale, et une position sortie minimale dans laquelle elles limitent entre elles la section d'évacuation minimale, et où les parois de buse (6, 7) peuvent pivoter respectivement autour d'un axe de rotation propre (8, 9), espacés l'un de l'autre, axe de rotation qui s'étend le long d'une zone de côté frontal (6a, 7a) de la paroi de buse concernée, ladite zone étant placée à l'opposé de l'ouverture de sortie (1).

2. Dispositif de sortie d'écoulement d'air selon la revendication 1, **caractérisé en outre en ce que** le dispositif forme une partie d'un système de ventilation de l'habitacle d'un véhicule, de manière telle que l'ouverture de sortie (1) puisse être prévue sur le dessus d'un tableau de bord (2) et recouverte par un élément de recouvrement (11) perméable à l'air, et que l'élément de buse (5) soit réglable entre une position servant à fournir un flux d'air de dégivrage (lOb), et une position servant à produire un flux d'air diffus (10a).
